Europäisches Patentamt

European Patent Office

Office européen des brevets

(11) Veröffentlichungsnummer: **0 203 352**
**A1**

(12) **EUROPÄISCHE PATENTANMELDUNG**

(21) Anmeldenummer: **86105437.7**

(22) Anmeldetag: **19.04.86**

(51) Int. Cl.⁴: **B 65 G 21/20**, B 65 G 15/62

(30) Priorität: **21.05.85 DE 3518134**

(43) Veröffentlichungstag der Anmeldung: **03.12.86**
**Patentblatt 86/49**

(84) Benannte Vertragsstaaten: **CH DE FR GB IT LI**

(71) Anmelder: **ROBERT BOSCH GMBH, Postfach 50,
D-7000 Stuttgart 1 (DE)**

(72) Erfinder: **Leisner, Ernst, Dipl.-Ing., Wettertalstrasse 4,
D-7257 Ditzingen (DE)**
Erfinder: **Maier, Gernot, Ing. grad., Im Geiger 81,
D-7000 Stuttgart 50 (DE)**
Erfinder: **Rothfuss, Peter, J.-S.-Bachstrasse 6/1,
D-7257 Ditzingen (DE)**

(54) **Führungsprofil für einen Fördergurt.**

(57) Führungsprofil (20) für einen Fördergurt (22), welches auf einem starren Tragprofil (10) befestigt ist. Die Befestigung erfolgt erfindungsgemäß durch Rastmittel (14, 16, 44, 46), welche beim Aufsetzen des Führungsprofils (20) auf das Tragprofil (10) selbsttätig in Eingriff kommen und das Führungsprofil (20) spielfrei am Tragprofil (10) festhalten. Dadurch ist erreicht, daß zusätzliche Mittel und Arbeitsgänge zum Befestigen des Führungsprofils (20) am Tragprofil (10) entfallen.

20021

0203352

R.

29.5.1985 Ki/Le

— 1 —

ROBERT BOSCH GMBH, 7000 STUTTGART 1

## Führungsprofil für einen Fördergurt

### Stand der Technik

Die Erfindung bezieht sich auf ein Führungsprofil für einen Fördergurt, insbesondere zur Verwendung bei Doppelgurtförderern für Werkstückträger, nach der Gattung des Hauptanspruchs. Ein bekanntes Führungsprofil dieser Gattung (DE-A1 30 12 275) ist durch Schrauben am Tragprofil befestigt, die durch zentrale Bohrungen in der Bodenleiste des Führungsprofils hindurchtreten und in Gewindebohrungen von Befestigungsbolzen eingeschraubt sind, welche in Querbohrungen im Tragprofil gelagert und abgestützt sind. Diese Ausführung ergibt eine sichere Verbindung des Führungsprofils mit dem Tragprofil, bedingt jedoch zusätzliche Teile und zusätzliche Arbeitsgänge zum Herstellen der Bohrungen im Führungsprofil und im Tragprofil.

### Vorteile der Erfindung

Die erfindungsgemäße Anordnung mit den kennzeichnenden Merkmalen des Hauptanspruchs hat demgegenüber den Vorteil,

...

daß bei entsprechender Bemessung der Rastmittel eine sichere
und spielfreie Verbindung des Führungsprofils mit dem Tragprofil ohne zusätzliche Arbeitsgänge erreicht werden kann.

Durch die in den Unteransprüchen aufgeführten Maßnahmen sind
vorteilhafte Weiterbildungen der Anordnung nach dem Hauptanspruch möglich.

Besonders vorteilhaft ist es, wenn die Rastmittel aus mindestens einer einstückig an die Bodenleiste des Führungsprofils angeformten Rastleiste bestehen, welche eine Rastkante hat und seitlich auslenkbar ist. Dadurch ist erreicht,
daß das Führungsprofil als Strangpreßprofil mit einstückig
angeformten Rastmitteln ausgebildet sein kann, welches nachträglich nicht mehr bearbeitet werden muß.

Bei Führungsprofilen, die zum Anbau an kastenförmige Tragprofile dienen, deren obere Kastenwand eine zentrale Längsöffnung aufweist und deren beide verbleibenden seitlichen
Wandabschnitte der oberen Kastenwand als Tragflansche für die
Bodenleiste des Führungsprofils dienen, ergibt sich eine
sichere Verbindung mit dem Tragprofil, wenn die Rastleiste
so angeordnet und ausgebildet ist, daß sie den Stirnrand
eines Tragflansches des Tragprofils zu umgreifen vermag.

Eine zweite, nach unten vorstehende Leiste des Führungsprofils kann vorteilhaft starr ausgeführt und mit einem Einhängeschenkel am freien Ende versehen sein. Beim Befestigen des
Führungsprofils am Tragprofil wird in diesem Fall zunächst die
starr ausgeführte Leiste in den Stirnrand des einen Tragflansches des Tragprofils eingehängt und dann durch Niederdrücken
des Führungsprofils die federnd auslenkbare Rastleiste unter
den Stirnrand des anderen Tragflansches eingerastet. Die
starre Leiste des Führungsprofils sorgt dafür, daß dieses

...

gegenüber dem Tragprofil exakt ausgerichtet ist.

Nach einem weiteren Vorschlag der Erfindung ist eine an die
Bodenleiste angeformte Führungswange mit einer Nut zur Aufnahme von energieführenden Leitungen u.a. versehen.

Zur Vermeidung der Reibung zwischen dem Fördergurt und dem
Führungsprofil wird erfindungsgemäß weiter vorgeschlagen,
daß die Gleitfläche für den Fördergurt am Führungsprofil
mindestens teilweise mit einem Raster von Vertiefungen
(Waffelung) versehen ist. Diese Maßnahme hat den weiteren
Vorteil, daß bei Naßbetrieb ein Ansaugen des Fördergurtes
am Führungsprofil vermieden wird.

Zeichnung

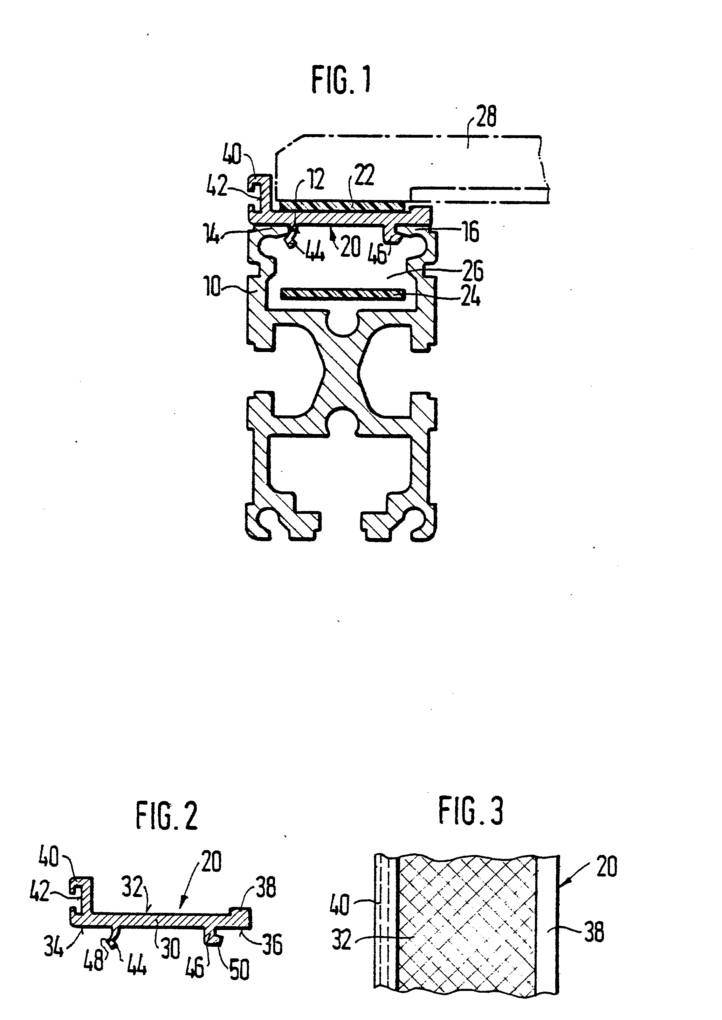

Ein Ausführungsbeispiel ist in der Zeichnung dargestellt
und in der nachfolgenden Beschreibung näher erläutert. Es
zeigen Figur 1 einen Querschnitt der einen Förderbahn eines
Doppelgurtförderers für Werkstückträger der industriellen
Fertigung, Figur 2 das Führungsprofil der Förderbahn nach
Figur 1 im Schnitt und Figur 3 eine Draufsicht auf das
Führungsprofil nach Figur 2.

Beschreibung des Ausführungsbeispiels

Die dargestellte Förderbahn eines Doppelgurtförderers hat ein
im Strangpreßverfahren hergestelltes Tragprofil 10 aus
Leichtmetall, welches wie bekannt ein kastenförmiges Umrißprofil hat. Die obere Kastenwand ist mit einer durchgehenden Längsöffnung 12 versehen, die von zwei seitlichen
Wandabschnitten 14, 16 begrenzt ist. Diese dienen als Tragflansche für ein aufgesetztes Führungsprofil 20, welches
aus einem Kunststoff mit guten Gleiteigenschaften besteht und als Auflage und Führung für den einen Strang 22 eines
endlosen Fördergurtes dient. Der andere Strang 24 des
Fördergurtes durchsetzt eine innere Kammer 26 des Tragprofils 10, in welche die Längsöffnung 12 einmündet.
Auf dem Fördergurt liegen in Figur 1 angedeutete Werkstückträger 28 auf, welche durch Reibungsschluß auf dem
Fördergurt mitbewegt werden.

Das Führungsprofil 20 hat eine Bodenleiste 30, die auf
ihrer Oberseite eine Gleitfläche 32 für den oberen Strang
22 des Fördergurtes bildet. Die Gleitfläche 32 ist mit
einem Raster von Vertiefungen (Waffelung, Figur 3) versehen. Auf der Unterseite hat die Bodenleiste 30 zwei
Basisflächen 34, 36, mit welchen das Führungsprofil 20
auf den Wandabschnitten 14, 16 des Tragprofils 10 aufliegt. An den beiden Längsrändern der Gleitfläche 32
sind Führungswangen 38 und 40 für den Fördergurt gebildet, von denen die außenliegende, 40, nach oben hochgezogen ist und gleichzeitig auch zur Führung der Werkstückträger 28 dient. In der Führungswange 40 ist eine
mitextrudierte Nut 42 für energieführende Leitungen,
Bezeichnungsschilder u.a. gebildet.

Die Bodenleiste 30 des Führungsprofils 20 ist an der
Unterseite mit zwei einstückig angeformten Leisten 44,
46 versehen, welche zum rastenden Festhalten des
Führungsprofils 20 am Tragprofil 10 dienen. Die Leiste
44 umgreift den Stirnrand des Wandabschnittes 14,
während die Leiste 46 den Stirnrand des Wandabschnittes
16 des Tragprofils 10 umgreift. Die Leiste 44 ist zur
Längsmittelebene des Führungsprofils 20 hin auslenkbar
und mit einer Rastkante 48 versehen, welche unter den
Stirnrand des Wandabschnittes 14 greift. Die Leiste 46
ist starr ausgeführt und an ihrem freien Ende mit einem

20021

- 5 -

nach außen weisenden Einhängeschenkel 50 versehen.

Zum Anbringen des Führungsprofils 20 am Tragprofil 10 wird das Führungsprofil 20 zunächst um seine Längsachse geschwenkt von oben an das Tragprofil 10 herangeführt und die Leiste 46 in den Stirnrand des Wandabschnittes 16 eingehängt. Danach wird das Führungsprofil 20 um seine Längsachse in die horizontale Lage geschwenkt, wobei die Leiste 44 vorübergehend nach innen ausgelenkt wird. Wenn das Führungsprofil 20 zur beidseitigen Auflage auf dem Tragprofil 10 gekommen ist, greift die Rastkante 48 der Leiste 44 unter den Stirnrand des Wandabschnittes 14 und hält das Führungsprofil 20 spielfrei am Tragprofil 10 fest. Durch die Rasterung der Gleitfläche 32 des Führungsprofils 20 wird im Naßbetrieb ein Ansaugen des Fördergurtes auf dem Führungsprofil 20 vermieden und die Flüssigkeit zwischen den Teilen seitlich abgeführt. Bei Trockenbetrieb wird durch das Luftpolster, welches sich in den Vertiefungen des Rasters bildet, die Reibung zwischen Fördergurt und Führungsprofil 20 vermindert.

R.
29.5.1985, Ki/Le

0203352

ROBERT BOSCH GMBH, 7000 STUTTGART 1

Ansprüche

1. Führungsprofil für einen Fördergurt, insbesondere zur Verwendung bei Doppelgurtförderern für Werkstückträger, mit einer Bodenleiste, die auf ihrer Oberseite eine Gleitfläche für den Fördergurt bildet und auf ihrer Unterseite mit Basisflächen zum Auflegen des Führungsprofils auf ein starres Tragprofil versehen ist, ferner mit mindestens einer Führungswange für den Fördergurt an einem Längsrand der Gleitfläche, und mit an der Bodenleiste vorgesehenen Mitteln zum Befestigen des Führungsprofiles am Tragprofil, dadurch gekennzeichnet, daß die Bodenleiste (30) mit nach unten vorstehenden Rastmitteln (44, 46) zum rastenden Verbinden des Führungsprofils (20) mit dem Tragprofil (10) versehen ist.

2. Führungsprofil nach Anspruch 1, dadurch gekennzeichnet, daß die Rastmittel aus mindestens einer einstückig an die Bodenleiste (30) angeformten Rastleiste (44) bestehen, welche eine Rastkante (48) hat und seitlich auslenkbar ist.

3. Führungsprofil nach Anspruch 2, bestimmt zum Anbau an ein kastenförmiges Tragprofil, dessen obere Kastenwand eine zentrale Längsöffnung aufweist und dessen beide verbleibenden seitlichen Wandabschnitte der oberen Kastenwand als Tragflansche für die Bodenleiste des Führungsprofils dienen, dadurch gekennzeichnet, daß die Rastleiste (44) so angeordnet und ausgebildet ist, daß sie den Stirnrand eines Tragflansches (14) des Tragprofils (10) zu umgreifen vermag.

4. Führungsprofil nach Anspruch 3, dadurch gekennzeichnet, daß an die Bodenleiste (30) eine, zweite nach unten vorstehende Leiste (46) angeformt ist, welche den Stirnrand des zweiten Tragflansches (16) des Tragprofils (10) zu umgreifen vermag.

5. Führungsprofil nach Anspruch 4, dadurch gekennzeichnet, daß die zweite nach unten vorstehende Leiste (46) einen Einhängeschenkel (50) am freien Ende bildet.

6. Führungsprofil nach einem der vorhergehenden Ansprüche, mit einer an die Bodenleiste angeformten Führungswange für Werkstückträger, dadurch gekennzeichnet, daß die Führungswange (40) mit einer Nut (42) zur Aufnahme von energieführenden Leitungen u.a. versehen ist.

7. Führungsprofil nach einem der vorhergehenden Ansprüche, dadurch gekennzeichnet, daß die Gleitfläche (32) für den Fördergurt (22) mindestens teilweise mit einem Raster von Ver- tiefungen (Waffelung) versehen ist.

1/1    0203352

FIG. 1

FIG. 2

FIG. 3

## EINSCHLÄGIGE DOKUMENTE

EP 86105437.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | DE - A1 - 3 012 275 (BOSCH)<br>  * Fig. 1; Seite 5, Zeilen 22-26 * | 1 | B 65 G 21/20<br>B 65 G 15/62 |
| D,Y | | 2-4 | |
| | -- | | |
| Y | FR - A1 - 2 544 292 (CARNAUD)<br>  * Fig. 2; Seite 5, 2. Absatz * | 2-4 | |
| | ---- | | |

|  | RECHERCHIERTE SACHGEBIETE (Int. Cl.4) |
|---|---|
| | B 65 G<br>F 16 B |

Der vorliegende Recherchenbericht wurde für alle Patentansprüche erstellt.

| Recherchenort | Abschlußdatum der Recherche | Prüfer |
|---|---|---|
| WIEN | 29-07-1986 | BAUMGARTNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82